# EUROPEAN PATENT SPECIFICATION

(11) **EP 2 925 053 B1**
(45) Date of publication and mention of the grant of the patent: **30.01.2019**
(21) Application number: 13864289.7
(22) Date of filing: 22.08.2013
(51) Int. Cl.: H04W 36/00, H04L 29/06

(54) **CALL SWITCHING METHOD, DEVICE AND SYSTEM**
RUFUMSCHALTUNGSVERFAHREN, -VORRICHTUNG UND SYSTEM
PROCÉDÉ, DISPOSITIF ET SYSTÈME DE COMMUTATION D'APPELS

(30) Priority: 18.12.2012 CN 201210549983; 14.01.2013 CN 201310012730
(43) Date of publication of application: 30.09.2015
(73) Proprietor: Huawei Technologies Co., Ltd., Longgang District Shenzhen, Guangdong 518129 (CN)
(72) Inventor: XIA, Muqiang, Shenzhen Guangdong 518129 (CN)
(74) Representative: Pfenning, Meinig & Partner mbB
(86) International application number: PCT/CN2013/082021
(87) International publication number: WO 2014/094448

(56) References cited:
- EP-A1- 2 234 381
- CN-A- 101 257 437
- CN-A- 101 453 791
- CN-A- 101 471 860
- CN-A- 103 079 242
- US-A1- 2010 274 905
- "3rd Generation Partnership Project; Technical Specification Group Core Network and Terminals; Interworking between SIP-I based circuit-switched core network and other networks (Release 11)", 3GPP STANDARD; 3GPP TS 29.235, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V11.0.0, 21 September 2012 (2012-09-21), pages 1-105, XP050649637, [retrieved on 2012-09-21]
- '3rd Generation Partnership Project; Technical Specification Group Services and System Aspects; Telecommunication management; Performance Management (PM); Performance measurements; Core Network (CN) Circuit Switched (CS) domain; UMTS and combined UMTS/GSM (Release 9),' 3GPP TS 32.407 V9.1.0 30 June 2011, XP050550890

## Description

### TECHNICAL FIELD

The present invention relates to the field of communications technologies, and in particular, to a call switching method, apparatus, and system.

### BACKGROUND

The Bearer Independent Call Control (Bearer Independent Call Control Protocol, BICC) protocol is an application layer control protocol, and may be used to establish, modify, and terminate a call. A most basic feature of this protocol is that call control is separated from bearer control so that a Call Service Function (Call Service Function, CSF) and a Bearer Control Function (Bearer Control Function, BCF) to be independent of each other. This protocol applies to a call control interface between Mobile Switching Center (Mobile Switch Center, MSC) servers.

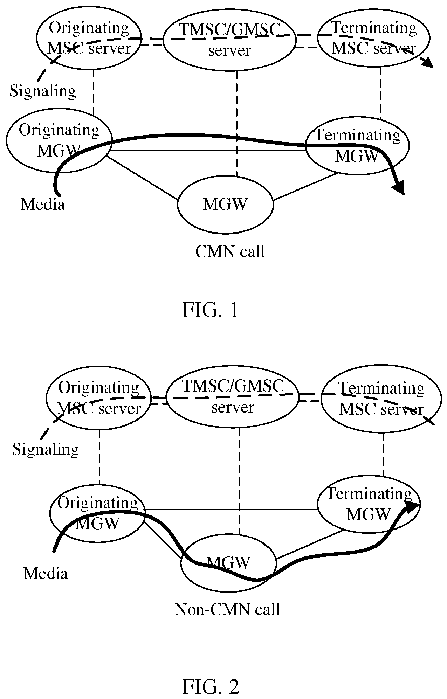

A Call Mediation Node (Call Mediation Node, CMN) is a node that does not have a media node control function but only has a Bearer Control Function BCF. A main function of the CMN is to complete signaling link aggregation between originating Mobile Switching Center MSC servers, and a called number analysis function, so as to implement transmission of Bearer Independent Call Control (Bearer Independent Call Control Protocol, BICC) protocol information between the MSC servers. Interworking on the media plane is directly performed between Media Gateways (Media Gateway, MGW) of the MSC servers, which may reduce roundabout media paths at a tandem or gateway office, as shown in a media path of a CMN call in FIG. 1. FIG. 1 includes an originating MSC and an originating MGW, a TMSC/GMSC, an MGW controlled by the TMSC/GMSC, a terminating MSC, and an MGW controlled by the terminating MSC. A black line in FIG. 1 represents the media path of the call. It may be seen from FIG. 1 that the media path is directly from the originating MGW to the terminating MGW and media does not need to pass through the MGW controlled by the Gateway Mobile Switching Center (Gateway Mobile Switching Center, GMSC) or the Tandem Mobile Switching Center (Tandem Mobile Switching Center, TMSC). In addition to the CMN media path, there also is a non-CMN media path, as shown in FIG. 2. Architecture in FIG. 2 is the same as architecture in FIG. 1. It may be seen from FIG. 2 that in a process of being transmitted from the originating MGW to the terminating MGW, media further needs to pass through the MGW controlled by the TMSC/GMSC.

In the existing protocols, an MGW bypass function is a function of the CMN. In a call establishment stage, the GMSC may not control the MGW, and directly and transparently transmits information related to a Session Description Protocol (Session Description Protocol, SDP) Offer/Answer bearer of adjacent nodes, such as a media address.

In the prior art, CMN establishment can occur only during setup of a Session Initiation Protocol (Session Initiation Protocol, SIP) call, and for the whole duration of the call, conversational traffic takes a same media path, which is either a CMN media path or a non-CMN media path. In service scenarios that need involvement of the media plane, such as announcement playback and interception, operations of removing an MGW and re-inserting the MGW are not supported.
"3rd Generation Partnership Project; Technical Sepcification Group Core Network and Terminals; Interworking between SIP-I based circuit-switched core network and other works(Release 11)", 3GPP STANDARD; 3GPP TS 29.235, 3RD GENERATION PARTNERSHIP PROJECT 93GPP), MOBILE COMPETENCE CENTRE; 650, ROUTE DES LUCIOLES; F-06921 SOPHIA-ANTIPOLIS CEDEX; FRANCE, vol, CT WG3, no. V 11.0.0, 21 September 2012 (2012-09-21), pages 1-105, XP050649637, discloses " interworking between SIP-I based circuit-switched core network and other networks".

US 2010/274905 A1 discloses a method in communications nodes for signalling a MGW Identity comprising the steps of " identifying a seized MGW; and sending a signal via SIP having information which identifies the seized MGW".

EP 2 234 381 A1 discloses a method for selecting a call mediation node (CMN) for soft-switch equipment.

### SUMMARY

The present invention provides a call switching method, apparatus, and system, so as to solve a problem in the prior art in which operations of removing an MGW and re-inserting the MGW are not supported in service scenarios that require involvement of a media plane, such as announcement playback and interception. A Media Gateway is dynamically controlled according to a call service, to perform a switch between a non-CMN media path and a CMN path.

The problem is solved by method in the independent claims. According to a first aspect, the present invention provides a call switching method, where the method includes:
determining, by a call switching apparatus, according to a call task of a first entity calling a second entity and a received call answer sent by the second entity switching, whether the call task is a bearer service and whether a type of the call task is a Call Mediation Node CMN call; in the communication process between the first entity and the second entity, when the call task is a non-bearer service and the type of the call task is a non-CMN call task, switching the call task from a non-CMN call to a CMN call, and using the CMN call to process the non-bearer service; and
when the call task is a bearer service and the type of the call task is a CMN call task, switching the call task from a CMN call to a non-CMN call, and using the non-CMN call to process the bearer service.

In a first possible implementation, the switching the call task from a CMN call to the non-CMN call includes:
sending a first negotiation request to the first entity;
receiving a first negotiation response sent by the first entity, and establishing a call path whose call flow direction is from the first entity to the MSC;
sending a second negotiation request to the second entity;
receiving a second negotiation response sent by the second entity, and establishing a call path whose call flow direction is from the MSC to the second entity; and
establishing a first media path with the first entity and the second entity, and completing the switching from a CMN call to a non-CMN, where the first media path is an in-order path whose call flow direction is from the first entity to the MSC and then from the MSC to the second entity.

According to a second aspect, the present invention provides a call switching apparatus, where the apparatus includes:
a determining unit, configured to determine, according to a call task of a first entity calling a second entity and a received call answer sent by the second entity, whether the call task is a bearer service and whether a type of the call task is a Call Mediation Node CMN call; and
a switching unit, configured to: in the communication process between the first entity and the second entity, when the determining unit determines that the call task is a non-bearer service and the type of the call task is a non-CMN call task, switching the call task from a non-CMN call to a CMN call, and use the CMN call to process the non-bearer service; where
the switching unit is further configured to: when the determining unit determines that the call task is a bearer service and the type of the call task is a CMN call task, switching the call task from a CMN call to a non-CMN call, and use the non-CMN call to process the bearer service.

In a first possible implementation of the second aspect, when the determining unit determines that the call task is a bearer service and the type of the call task is a CMN call task, the call switching apparatus further includes:
a sending unit, configured to send a first negotiation request to the first entity;
a receiving unit, configured to: after the sending unit sends the first negotiation request, receive a first negotiation response sent by the first entity, and establish a call path whose call flow direction is from the first entity to the MSC; where
the sending unit is further configured to send a second negotiation request to the second entity; and
the receiving unit is further configured to: after the sending unit sends the second negotiation request, receive a second negotiation response sent by the second entity, and establish a call path whose call flow direction is from the MSC to the second entity; and
a path establishing unit, configured to: after the receiving unit receives the second negotiation response, establish a first media path with the first entity and the second entity, and complete a switching from a CMN call to a non-CMN, where the first media path is an in-order path whose call flow direction is from the first entity to the MSC and then from the MSC to the second entity.

According to a third aspect, the present invention provides a call control system, where the system includes:
a call switching apparatus, configured to: determine, according to a call task of a first entity calling a second entity and a received call answer sent by the second entity, whether the call task is a bearer service and whether a type of the call task is a Call Mediation Node CMN call; when the call task is a non-bearer service and the type of the call task is a non-CMN call task, switching the call task from a non-CMN call to a CMN call, and use the CMN call to process the non-bearer service; and in the communication process between the first entity and the second entity, when the call task is a bearer service and the type of the call task is a CMN call task, switching the call task from a CMN call to a non-CMN call, and use the non-CMN call to process the bearer service;
a first entity, configured to send a call establishment request to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service; and
a second entity, configured to send the call answer to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service.

By applying the call switching method, apparatus, and system disclosed in the present invention, it is determined, according to a call task of a first entity calling a second entity and a received call answer sent by the second entity, whether the call task is a bearer service for which media plane information needs to be acquired or involvement of media plane processing is required; when the call task is not a bearer service, the current call from the first entity to the second entity is switched from a non-CMN call to a CMN call, so that a media path of the current call is switched from a non-CMN call media path to a CMN media path; in a communication process between the first entity and the second entity, when the call task is a bearer service, the current call from the first entity to the second entity is switched from a CMN call to a non-CMN call, so that the media path of the current call is switched from a CMN call media path to a non-CMN media path, and the non-CMN call and the non-CMN call media path are used to process the bearer service; and after processing of the bearer service is ended, the current call is switched from a non-CMN call to a CMN call, so that the media path of the current call is switched from a non-CMN call media path to a CMN media path. This is done so that a Media Gateway is dynamically controlled according to the call task of the first entity calling the second entity, to perform a switching between a non-CMN media path and a CMN path.

### BRIEF DESCRIPTION OF DRAWINGS

FIG. 1 is a schematic diagram of a CMN call in the prior art;
FIG. 2 is a schematic diagram of a non-CMN call in the prior art;
FIG. 3 is a flowchart of a call switching method according to an embodiment of the present invention;
FIG. 4 is a flowchart of a call switching method according to an embodiment of the present invention;
FIG. 5 is a flowchart of a call switching method according to an embodiment of the present invention;
FIG. 6 is a diagram of information interaction of a call switching method according to an embodiment of the present invention;
FIG. 7 is a schematic diagram of a call switching apparatus according to an embodiment of the present invention; and
FIG. 8 is a schematic diagram of a call switching apparatus according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Embodiments of the present invention disclose a call switching method, apparatus, and system. A GMSC or a TMSC determines, according to a call task of a first entity calling a second entity and a received call answer sent by the second entity, whether the call task is a bearer service for which media plane information needs to be acquired or involvement of media plane processing is required; when the call task is not a bearer service, the current call from the first entity to the second entity is switched from a non-CMN call to a CMN call, so that a media path of the current call is switched from a non-CMN call media path to a CMN media path; in a communication process between the first entity and the second entity, when the call task is a bearer service, the current call from the first entity to the second entity is switched from a CMN call to a non-CMN call, so that the media path of the current call is switched from a CMN call media path to a non-CMN media path, and the non-CMN call and the non-CMN call media path are used to process the bearer service; and after processing of the bearer service is ended, the current call is switched from a non-CMN call to a CMN call, so that the media path of the current call is switched from a non-CMN call media path to a CMN media path. This is done so that a Media Gateway is dynamically controlled according to the call task of the first entity calling the second entity to perform a switching between a non-CMN media path and a CMN path.

Each SDP information involved in all embodiments of the present invention includes IP address information, port information, and codec information. An information format of each SDP information is as follows:
c=IN IP4<IP address information>
t=0 0
m=audio<Port information> RTP/AVP<Codec information>
a=rtpmap:<Codec information>

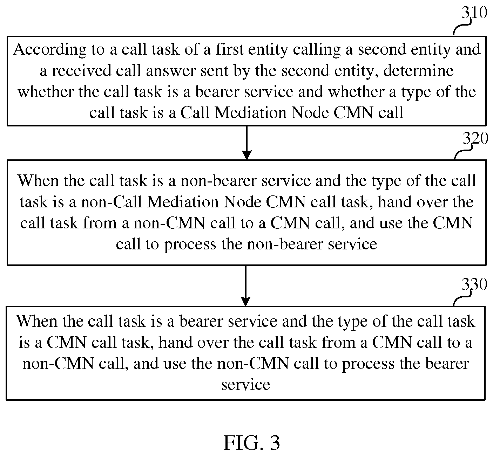

FIG. 3 is a flowchart of a call switching method according to an embodiment of the present invention. As shown in this figure, this embodiment specifically includes the following steps:
Step 310: A call switching apparatus, for example, a Mobile Switching Center MSC, which is a GMSC or a TMSC in this embodiment, determines, according to a call task of a first entity calling a second entity and a received call answer sent by the second entity, whether the call task is a bearer service. The first entity includes an originating MSC and an originating MGW; the second entity includes a terminating MSC and a terminating MGW.

It should be noted that after receiving the call answer sent by the second entity, the MSC acquires, according to the call task, an identifier which is in the call task and indicates whether the call task is a bearer service. The MSC can determine according to the identifier whether the call task is a bearer service.

Specifically, in the call switching method provided in this embodiment, a determination of whether the call task is a bearer service is made after the GMSC or the TMSC receives the call answer sent by the second entity, so that the call can hands over between a CMN call and a non-CMN call. However, before the call answer sent by the second entity is received, a non-CMN call is established, a process of which is specifically as follows: receiving a first call establishment request sent by the first entity, and sending a first call request response to first entity; sending, by the MSC, a second call establishment request to the second entity; and receiving, by the MSC, a second call request response sent by the second entity, and establishing the call task, where a type of the call task is a non-CMN call, and a media path of the call task is a first media path, where the first media path is an in-order path in which a flow direction of the call is from the first entity to the MSC and then from the MSC to the second entity. The bearer service involved in step 310 includes a service for which media plane information needs to be acquired or involvement of media plane processing is required, such as intelligent announcement playback, DTMF digit collection, codec conversion.

Step 320: When the call task is a non-bearer service and a type of the call task is a non-Call Mediation Node CMN call task, switching the call task from a non-CMN call to a CMN call, and use the CMN call to process the non-bearer service.

The switching from a non-CMN to a CMN call is specifically as follows: sending, to the first entity, a negotiation request that carries information about the second entity, where the information about the second entity includes IP address, port, and codec information of the second entity; and
sending, to the second entity, a negotiation request that carries information about the first entity, where the information about the first entity includes IP address, port, and codec information of the first entity, so that according to the IP address, port, and codec information of each other, the first entity and the second entity establish a second media path of the call task, and complete the switching from a CMN call to a non-CMN call, where the second media path is an in-order path in which a flow direction of the call is from the first entity to the second entity.

Step 330: When the call task is a bearer service and the type of the call task is a CMN call task, switching the call task from a CMN call to a non-CMN call, and use the non-CMN call to process the bearer service.

The switching from a CMN to a non-CMN call is specifically as follows:
sending, by the Mobile Switching Center MSC, a negotiation request to both the first entity and the second entity; receiving a negotiation response from both the first entity and the second entity, so that the first entity, the MSC, and the second entity establish a first media path of the call task, and complete the switching from a CMN call to a non-CMN call, where the first media path is an in-order path in which a flow direction of the call is from the first entity to the MSC and then from the MSC to the second entity.

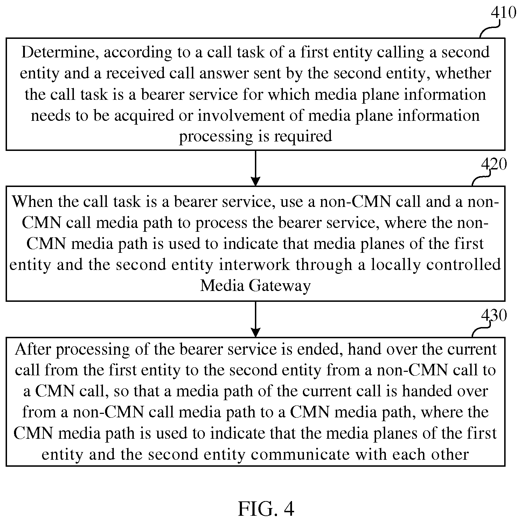

FIG. 4 is a flowchart of a call switching method according to an embodiment of the present invention. As shown in this figure, this embodiment specifically includes the following steps:

Step 410: A GMSC or a TMSC determines, according to a call task of a first entity calling a second entity and a received call answer sent by the second entity, whether the call task is a bearer service for which media plane information needs to be acquired or involvement of media plane processing is required. The first entity includes the first entity and an originating MGW; the second entity includes the second entity and a terminating MGW. This step is the same as step 310, and details are not described herein again.

Step 420: When the call task is a bearer service, use a non-CMN call and a non-CMN call media path to process the bearer service, where the non-CMN media path is used to indicate that media planes of the first entity and the second entity interwork through a locally controlled Media Gateway.

Step 430: After processing of the bearer service is ended, switching the current call, which is from the first entity to the second entity, from a non-CMN call to a CMN call, so that the media path of the current call is switched from a non-CMN call media path to a CMN media path, where the CMN media path is used to indicate the media planes of the first entity and the second entity communicate with each other directly. This step is the same as step 340 in which a current call is switched to a CMN call so that the media path of the current call is a CMN media path. Details are not described herein again.

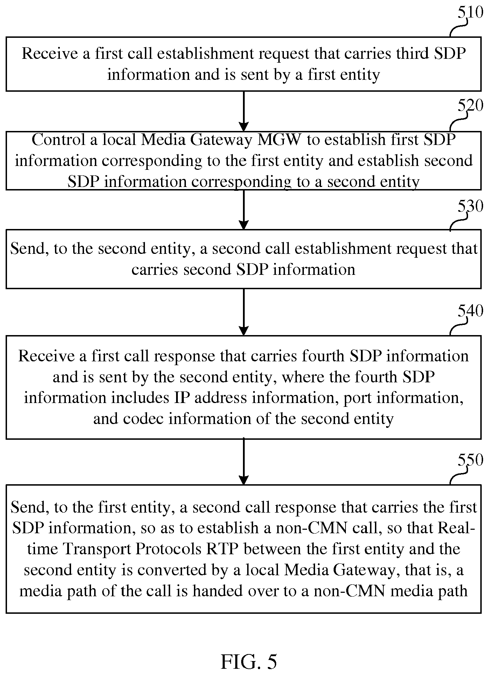

Further, before the foregoing step 310 and step 410, the following is further included: the GMSC or the TMSC establishes a non-CMN call, and sets the media path as a non-CMN media path. As shown in FIG. 5, this step specifically includes the following steps:

Step 510: The GMSC or the TMSC receives a first call establishment request that carries third SDP information and is sent by the first entity, where the third SDP information includes IP address information, port information, and codec information of the first entity.

Step 520: The GMSC or the TMSC controls the local Media Gateway MGW to establish first SDP information corresponding to the first entity and establish second SDP information corresponding to the second entity. The first SDP information includes IP address information, port information, and codec information which are corresponding to the first entity; the second SDP information includes IP address information, port information, and codec information which are corresponding to the second entity.

Step 530: The GMSC or the TMSC sends, to the second entity, a second call establishment request that carries the second SDP information.

Step 540: The GMSC or the TMSC receives a first call response that carries fourth SDP information and is sent by the second entity, where the fourth SDP information includes IP address information, port information, and codec information of the second entity.

Step 550: The GMSC or the TMSC sends, to the first entity, a second call response that carries the first SDP information, so as to establish a non-CMN call, so that the first entity and the second entity perform media path conversion through the local Media Gateway MGW and by using the Real-time Transport Protocol RTP, that is, switch the media path of the current call to a non-CMN media path.

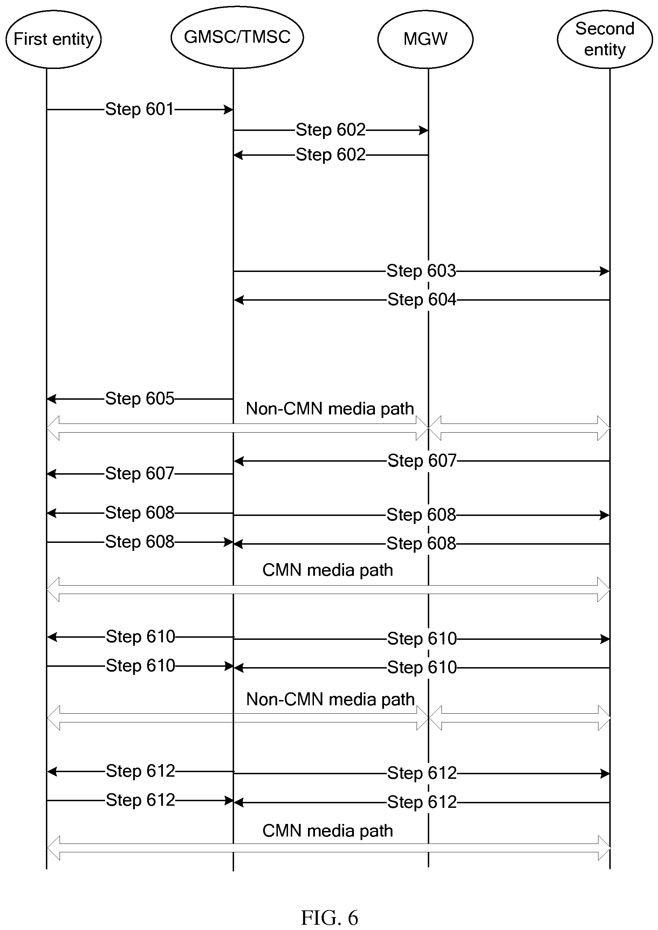

FIG. 6 is a diagram of information interaction of a call switching method according to an embodiment of the present invention. In this figure, a first entity, a GMSC or a TMSC, a local Media Gateway MGW, and a second entity are included. The first entity includes an originating MSC and an originating MGW; and the second entity includes a terminating MSC and a terminating MGW. The GMSC or the TMSC is an apparatus responsible for a switching between a CMN call and a non-CMN call, and an MGW is a Media Gateway controlled by the apparatus, and is responsible for a switching between a CMN media path and a non-CMN media path. In the example of, this figure, the first entity initiates a call to the second entity through the GMSC or the TMSC. This embodiment of the present invention specifically includes the following steps: Information formats of SDP2 information corresponding to the first entity, SDP3 information corresponding to the second entity, SDP1 information of the first entity, and SDP4 information of the second entity, which are involved in this embodiment, are respectively identical with the information formats of the first SDP information, the second SDP information, the third SDP information, and the fourth SDP information, and details are not described herein again.

Step 601: The first entity sends, to the GMSC or the TMSC, a first call establishment request that carries the SDP1 information of the first entity. The first entity includes an originating MSC and an originating MGW; the second entity includes a terminating MSC and a terminating MGW.

Step 602: After receiving the first call establishment request, the GMSC or the TMSC controls the local Media Gateway MGW to establish the SDP2 information corresponding to the first entity and establish the SDP3 information corresponding to the second entity.

It should be noted that the GMSC/TMSC needs to establish different logical nodes which respectively correspond to the first entity and the second entity, and two nodes have separate IP addresses and ports. In 3GPP TS29.235, the GMSC/TMSC defines two logical nodes, a T1 and a T2, which respectively correspond to the first entity and the second entity. This is done to achieve interaction between a logical node and both the first entity and the second entity, that is, the T1 interacts with the first entity, the T2 interacts with the second entity, and both the T1 and the T2 are logical nodes of the GMSC/TMSC. The GMSC/TMSC is a single entity, but provides two different IP addresses and ports. Therefore, from a perspective of an external entity, the GMSC/TMSC includes two nodes.

Here, the SDP2 information is information about the T1, that is, a set of information, such as an IP address, a port, and codec of the GMSC/TMSC. The SDP2 information is used by the first entity which receives the SDP2 information to derive information about the T1, such as an IP address and a port, so as to complete interaction between the SDP2 and the T1.

Similarly, the SDP3 information is information about the T2, and is used by the second entity which receives the SDP3 information to derive information about the T2, such as an IP address and a port, so as to complete interaction between the SDP2 and the T2. For the GMSC/TMSC, the logical nodes T1 and T2 are nodes derived from the GMSC/TMSC. Interaction of the T1 and the T2 with the first entity and the second entity is interaction of the GMSC/TMSC itself with the first entity and second entity.

Step 603: The GMSC or the TMSC sends, to the second entity, a second call establishment request that carries the SDP3 information corresponding to the second entity.

Step 604: The second entity sends, to the GMSC or the TMSC, a first call response that carries the SDP4 information of the second entity.

Step 605: The GMSC or the TMSC sends, to the first entity, a second call response that carries the SDP2 information corresponding to the first entity.

Step 606: Before a conversation, the MGW of the GMSC or the TMSC completes RTP interworking between the first entity and the second entity, that is, establish a non-CMN media path between the first entity and the second entity, so that RTP between the first entity and the second entity is converted by the Media Gateway MGW.

Step 607: When the second entity answers, and when the GMSC or the TMSC detects that a current service is not a bearer service and a voice codec used by the first entity is consistent with a voice codec used by the second entity, the GMSC or the TMSC prepares for switching the current call to a CMN call (an SIP media redirection), and prepares for switching a media path to a CMN media path. The bearer service is a service for which media plane information needs to be acquired or involvement of media plane information is required, such as intelligent announcement playback, DTMF digit collection, codec conversion, and interception.

Step 608: When determining that the current call may be switched to a CMN call, the GMSC or the TMSC sends, to the first entity, a negotiation request that carries the SDP4 information of the second entity, and sends, to the second entity, a negotiation request that carries the SDP1 information of the first entity; and after receipt of a negotiation response that carries the SDP1 information of the first entity and is sent by the first entity and a negotiation response that carries the SDP4 information of the second entity and is sent by the second entity, RTP interworking between the first entity and the second entity is directly implemented without influence of the MGW controlled by the GMSC or the TMSC, and the current call becomes a CMN call.

Step 609: In a conversation process, if the GMSC or the TMSC needs to use a bearer service, the current call is modified into a non-CMN call (SIP media redirection), and switching the media path is switched to a non-CMN media path.

Step 610: When determining that the MGW needs to be controlled, that is a bearer service is needed, the GMSC or the TMSC initiates, to the first entity, a negotiation request that carries the SDP2 information corresponding to the first entity, and initiates, to the second entity, a negotiation request carrying the SDP3 information corresponding to the second entity; and after receipt of a negotiation response that carries the SDP1 information of the first entity and is sent by the first entity and a negotiation response that carries the SDP4 information of the second entity and is sent by the second entity, RTP between the first entity and the second entity is converted by the MGW controlled by the GMSC or the TMSC, and the current call becomes a non-CMN call.

Step 611: After the foregoing service operation is completed, the current call is modified into a CMN call (SIP media redirection), and switching the media path is switched a CMN media path.

Step 612: After determining that a service in which control of the MGW needs to be exerted is completed, that is, a bearer service is needed is completed, the GMSC or the TMSC sends, to the first entity, a negotiation request that carries the SDP4 information of the second entity, and sends, to the second entity, a negotiation request that carries the SDP1 information of the first entity; and after receipt of a negotiation response that carries the SDP1 information of the first entity and is sent by the first entity and a negotiation response that carries the SDP4 information of the second entity and is sent by the second entity, RTP interworking between the first entity and the second entity is directly implemented without influence of the MGW controlled by the GMSC or the TMSC, and the current call becomes a CMN call.

Therefore, according to the call switching method provided in this embodiment of the present invention, a GMSC or a TMSC determines, according to a call task of a first entity calling a second entity and a received call answer sent by the second entity, whether the call task is a bearer service for which media plane information needs to be acquired or involvement of media plane processing is required; when the call task is not a bearer service, the current call from the first entity to the second entity is switched from a non-CMN call to a CMN call, so that a media path of the current call is switched from a non-CMN call media path to a CMN media path; in a communication process between the first entity and the second entity, when the call task is a bearer service, the current call from the first entity to the second entity is switched from a CMN call to a non-CMN call, so that the media path of the current call is switched from a CMN call media path to a non-CMN media path, and the non-CMN call and the non-CMN call media path are used to process the bearer service; and after processing of the bearer service is ended, the current call is switched from a non-CMN call to a CMN call, so that the media path of the current call is switched from a non-CMN call media path to a CMN media path. This is done so that a Media Gateway is dynamically controlled according to the call task of the first entity calling the second entity, to perform a switching between a non-CMN media path and a CMN path.

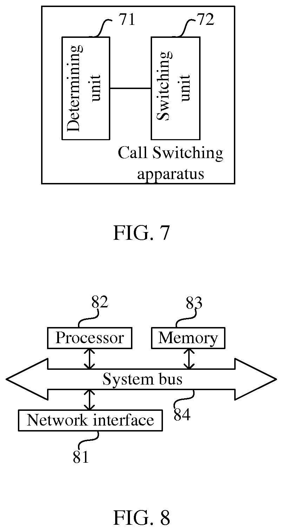

FIG. 7 is a schematic diagram of a call switching apparatus according to an embodiment of the present invention. The call switching apparatus, for example, a GMSC or a TMSC, is configured to execute the call switching method provided by any embodiment of FIG. 3 to FIG. 6. As shown in this figure, this embodiment of the present invention specifically includes a determining unit 71 and a switching unit 72.

The determining unit 71 is configured to determine, according to a call task of a first entity calling a second entity and a received call answer sent by the second entity, whether the call task is a bearer service and whether a type of the call task is a Call Mediation Node CMN call; the first entity includes an originating MSC and an originating MGW, and the second entity includes a terminating MSC and a terminating Media Gateway MGW.

It should be noted that after receiving the call answer sent by the second entity, a receiving unit acquires, according to the call task, an identifier which is in the call task and indicates whether the call task is a bearer service. The determining unit can determine, according to the identifier, whether the call task is a bearer service.

The switching unit 72 is configured to: when the determining unit determines that the call task is a non-bearer service and the type of the call task is a non-CMN call task, switching the call task from a non-CMN call to a CMN call, and use the CMN call to process the non-bearer service;
the switching unit is further configured to: when the determining unit determines that the call task is a bearer service and the type of the call task is a CMN call task, switching the call task from a CMN call to a non-CMN call, and use the non-CMN call to process the bearer service.

Specifically, before the receiving unit of the call switching apparatus receives the call answer sent by the second entity, a non-CMN call is established, a process of which is specifically as follows: receiving, by the receiving unit, a first call establishment request sent by the first entity, and sending, by a sending unit, a first call request response to first entity; sending a second call establishment request to the second entity; and receiving, by the receiving unit, a second call request response sent by the second entity, and establishing by, a path establishing unit, the call task, where a type of the call task is a non-CMN call, and a media path of the call task is an in-order path in which a flow direction of the call is from the first entity to the MSC and then from the MSC to the second entity.

The process in which the switching unit 72 hands over a non-CMN to a CMN call is specifically: sending, by the sending unit, a negotiation request that carries information about the second entity to the first entity, where the information about the second entity includes IP address, port, and codec information of the second entity; and
after the sending unit sends the negotiation request that carries the information about the second entity, sending, by the sending unit, to the second entity, a negotiation request that carries information about the first entity, where the information about the first entity includes IP address, port, and codec information of the first entity, so that according to the IP address, port, and codec information of each other, the first entity and the second entity establish a second media path of the call task, and complete the switching from a CMN call to a non-CMN call, where the second media path is an in-order path in which a flow direction of the call is from the first entity to the second entity.

The process in which the switching unit 72 hands over a CMN call to a non-CMN call is specifically:
sending, by the sending unit, a negotiation request to both the first entity and the second entity; receiving, by the receiving unit, a negotiation response from both by the first entity and the second entity, so that the first entity, the MSC, and the second entity establish a first media path of the call task, and complete the switching from a CMN call to a non-CMN call, where the first media path is an in-order path in which a flow direction of the call is from the first entity to the MSC and then from the MSC to the second entity.

Therefore, according to the call switching apparatus provided in this embodiment of the present invention, a GMSC or a TMSC determines, according to a call task of a first entity calling a second entity and a received call answer sent by the second entity, whether the call task is a bearer service for which media plane information needs to be acquired or involvement of media plane processing is required; when the call task is not a bearer service, the current call from the first entity to the second entity is switched from a non-CMN call to a CMN call, so that a media path of the current call is switched from a non-CMN call media path to a CMN media path; in a communication process between the first entity and the second entity, when the call task is a bearer service, the current call from the first entity to the second entity is switched from a CMN call to a non-CMN call, so that the media path of the current call is switched from a CMN call media path to a non-CMN media path, and the non-CMN call and the non-CMN call media path are used to process the bearer service; and after processing of the bearer service is ended, the current call is switched from a non-CMN call to a CMN call, so that the media path of the current call is switched from a non-CMN call media path to a CMN media path. This is done so that a Media Gateway is dynamically controlled according to the call task of the first entity calling the second entity, to perform a switching between a non-CMN media path and a CMN path.

FIG. 8 is a schematic diagram of a call switching apparatus according to an embodiment of the present invention. The call switching apparatus is configured to execute the call switching method provided by any embodiment of FIG. 3 to FIG. 6. As shown in this figure, this embodiment of the present invention specifically includes: this embodiment of the present invention includes a network interface 81, a processor 82, and a memory 83. A system bus 84 is configured to connect the network interface 81, the processor 82, and the memory 83.

The network interface 81 is used for communication between a GMSC or a TMSC, a local Media Gateway controlled by the GMSC or the TMSC, and a first entity and a second entity.

The memory 83 may be a non-volatile memory, for example, a hard disk drive and a flash memory. The memory 83 has a software module and a device driver. The software module can execute various functional modules involved in the foregoing method of the present invention, and the device driver may be a network or interface driver.

During startup, these software components are loaded to the memory 83, and then are accessed by the processor 82 and execute the following instructions:
the Gateway Mobile Switching Center GMSC or the Tandem Mobile Switching Center TMSC determines, according to a call task of the first entity calling the second entity and a received call answer sent by the second entity, whether the call task is a bearer service for which media plane information needs to be acquired or involvement of media plane processing is required, where the first entity includes an originating Mobile Switching Center MSC and an originating Media Gateway MGW; the second entity includes the second entity and a terminating MGW;
when the call task is not a bearer service, hands over the current call, which is from the first entity to the second entity, from a non-CMN call to a CMN call, so that a media path of the current call is switched from a non-CMN call media path to a CMN media path;
in a communication process between the first entity and the second entity, when the call task is a bearer service, hands over the current call, which is from the first entity to the second entity, from a CMN call to a non-CMN call, so that the media path of the current call is switched from a CMN call media path to a non-CMN media path, and the non-CMN call and the non-CMN call media path are used to process the bearer service; and
after processing of the bearer service is ended, hands over the current call from a non-CMN call to a CMN call, so that the media path of the current call is switched from a non-CMN call media path to a CMN media path.

Further, after the processor 82 accesses a software component of the memory 83, instructions that an application program may be used to enable the processor 82 and the apparatus to execute a process in which according to the call task of the first entity calling the second entity and the received call answer sent by the second entity, the GMSC or the TMSC determines whether the call task is a bearer service for which media plane information needs to be acquired or involvement of media plane processing is required are:
when the call task is a bearer service, uses a non-CMN call and a non-CMN call media path to process the bearer service, where the non-CMN media path is used to indicate that media planes of the first entity and the second entity interwork through the locally controlled Media Gateway; and after processing of the bearer service is ended, hands over the current call, which is from the first entity to the second entity, from a non-CMN call to a CMN call, so that the media path of the current call is switched from a non-CMN call media path to a CMN media path, where the CMN media path is used to indicate that media planes of the first entity and the second entity communicate with each other directly.

Further, after the processor 82 accesses a software component of the memory 83, instructions that the application program may be used to enable the processor 82 and the apparatus to execute in a process in which the current call from the first entity to the second entity is switched from a CMN call to a non-CMN call, so that the media path of the current call is switched from a CMN call media path to a non-CMN media path are:
the GMSC or the TMSC sends, to the first entity, a first negotiation request that carries first Session Description Protocol SDP information, where the first SDP information includes IP address information, port information, and codec information which are established by the local Media Gateway and correspond to the first entity; and sends, to the second entity, a second negotiation request that carries second SDP information, where the second SDP information includes IP address information, port information, and codec information which are established by the local Media Gateway and correspond to the second entity; and
the GMSC or the TMSC receives a first negotiation response that carries third SDP information and is sent by the first entity, where the third SDP information includes IP address information, port information, and codec information of the first entity; and receives a second negotiation response that carries fourth SDP information and is sent by the second entity, where the fourth SDP information includes IP address information, port information, and codec information of the second entity, so that Real-time Transport Protocols RTP between the first entity and the second entity is converted by the Media Gateway MGW, that is, the media path of the call is switched to a non-CMN media path, and at the same time, the current call is switched to a non-CMN call.

Further, after the processor 82 accesses a software component of the memory 83, instructions that the application program may be used to enable the processor 82 and the apparatus to execute in a process in which the current call from the first entity to the second entity is switched from a non-CMN call to a CMN call, so that the media path of the current call is switched from a non-CMN call media path to a CMN media path are:
the GMSC or the TMSC sends, to the first entity, a first negotiation request that carries fifth SDP information, where the fifth SDP information includes IP address information, port information, and codec information of the second entity; and sends, to the second entity, a second negotiation request that carries sixth SDP information, where the sixth SDP information includes IP address information, port information, and codec information of the first entity; and
the GMSC or the TMSC receives a first negotiation response that carries seventh SDP information and is sent by the first entity, where the seventh SDP information includes the IP address information, port information, and codec information of the first entity; and receives a second negotiation response that carries eighth SDP information and is sent by the second entity, where the eighth SDP information includes the IP address information, port information, and codec information of the second entity, so that Real-time Transport Protocol RTP interworking between the first entity and the second entity is directly implemented, that is, the media path of the call is switched to a CMN media path, and at the same time, the current call is switched to a CMN call.

Further, after the processor 82 accesses a software component of the memory 83, instructions that the application program may be used to enable the processor 82 and the apparatus to execute before a process of determining, according to the call task of the first entity calling the second entity and the received call answer sent by the second entity, whether the call task is a bearer service for which media plane information needs to be acquired or involvement of media plane processing is required are:
establish a non-CMN call, and set the media path as a non-CMN media path.

Further, after the processor 82 accesses a software component of the memory 83, instructions that the application program may be used to enable the processor 82 and the apparatus to execute in a process of establishing a non-CMN call and setting the media path as a non-CMN media path are:
receive a first call establishment request that carries the third SDP information and is sent by the first entity, where the third SDP information includes IP address information, port information, and codec information of the first entity;
control the Media Gateway MGW to establish the first SDP information corresponding to the first entity, where the first SDP information includes IP address information, port information, and codec information corresponding to the first entity; and establish the second SDP information corresponding to the second entity, where the second SDP information includes IP address information, port information, and codec information corresponding to the second entity;
send, to the second entity, a second call establishment request that carries the second SDP information;
receive a first call response that carries the fourth SDP information and is sent by the second entity, where the fourth SDP information includes IP address information, port information, and codec information of the second entity; and
send, to the first entity, a second call response that carries the first SDP information, so as to establish a non-CMN call, so that Real-time Transport Protocol RTP between the first entity and the second entity is converted by the Media Gateway MGW, that is, the media path of the call is switched to a non-CMN media path.

Therefore, according to the call switching apparatus provided in this embodiment of the present invention, a GMSC or a TMSC determines, according to a call task of a first entity calling a second entity and a received call answer sent by the second entity, whether the call task is a bearer service for which media plane information needs to be acquired or involvement of media plane processing is required; when the call task is not a bearer service, the current call from the first entity to the second entity is switched from a non-CMN call to a CMN call, so that a media path of the current call is switched from a non-CMN call media path to a CMN media path; in a communication process between the first entity and the second entity, when the call task is a bearer service, the current call from the first entity to the second entity is switched from a CMN call to a non-CMN call, so that the media path of the current call is switched from a CMN call media path to a non-CMN media path, and the non-CMN call and the non-CMN call media path are used to process the bearer service; and after processing of the bearer service is ended, the current call is switched from a non-CMN call to a CMN call, so that the media path of the current call is switched from a non-CMN call media path to a CMN media path. This is done so that a Media Gateway is dynamically controlled according to the call task of the first entity calling the second entity, to perform a switching between a non-CMN media path and a CMN path.

An embodiment of the present invention further provides a call switching system, where the system includes the call switching apparatus shown in FIG. 7, a local Media gateway, a first entity, and a second entity; or includes the call switching apparatus shown in FIG. 8, a local Media Gateway, a first entity, and a second entity.

The call switching apparatus includes a determining unit and a switching unit. The call switching apparatus is configured to: determine, according to a call task of the first entity calling the second entity and a received call answer sent by the second entity, whether the call task is a bearer service and whether a type of the call task is a Call Mediation Node CMN call; when the call task is a non-bearer service and the type of the call task is a non-CMN call task, switching the call task from a non-CMN call to a CMN call, and use the CMN call to process the non-bearer service; and when the call task is a bearer service and the type of the call task is a CMN call task, switching the call task from a CMN call to a non-CMN call, and use the non-CMN call to process the bearer service.

The first entity is configured to send a call establishment request to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service.

The second entity is configured to send the call answer to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service.

The process in which the call switching apparatus hands over the call task from a CMN call to a non-CMN call includes:
the call switching apparatus sends a first negotiation request to the first entity; receives a first negotiation response sent by the first entity, and establishes a call path whose call flow direction is from the first entity to the MSC; sends a second negotiation request to the second entity; receives a second negotiation response sent by the second entity, and establishes a call path whose call flow direction is from the MSC to the second entity; and establishes a first media path with the first entity and the second entity, and completes the switching from a CMN call to a non-CMN call, where the first media path is an in-order path whose call flow direction is from the first entity to the MSC, and then from the MSC to the second entity.

The process in which the call switching apparatus hands over the call task from a non-CMN call to a CMN call includes: sending, to the first entity, a negotiation request that carries information about the second entity, where the information about the second entity includes IP address, port, and codec information of the second entity; and sending, to the second entity, a negotiation request that carries information about the first entity, where the information about the first entity includes IP address, port, and codec information of the first entity, so that the first entity, according to the IP address, port, and codec information of the second entity, and the second entity, according to the IP address, port, and codec information of the first entity, establish a second media path between the first entity and the second entity, and complete the switching from a CMN call to a non-CMN call, where the second media path is an in-order path in which a flow direction of the call is from the first entity to the second entity.

Therefore, the call switching system provided in this embodiment of the present invention determines, according to a call task of a first entity calling a second entity and a received call answer sent by the second entity, whether the call task is a bearer service and whether a type of the call task is a Call Mediation Node CMN call; when the call task is a non-bearer service and the type of the call task is a non-CMN call task, hands over the call task from a non-CMN call to a CMN call, and use the CMN call to process the non-bearer service; and when the call task is a bearer service and the type of the call task is a CMN call task, hands over the call task from a CMN call to a non-CMN call, and use the non-CMN call to process the bearer service. This is done so that a Media Gateway is dynamically controlled according to the call task of the first entity calling the second entity, to perform a switching between a non-CMN media path and a CMN path.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementations, the objective, technical solutions, and benefits of the present invention are further described in detail. It should be understood that the foregoing descriptions are merely specific implementations of the present invention, but are not intended to limit the protection scope of the present invention. Any modification, equivalent replacement, or improvement made without departing from the principle of the present invention should fall within the protection scope of the present invention.

## Claims

1. A call switching method, wherein the method comprises:
Determining(310), by a call switching apparatus, according to a call task of calling a second entity by a first entity and a received call answer received from the second entity, whether the call task is a bearer service and whether a type of the call task is a Call Mediation Node CMN call; when the call task is a non-bearer service and the type of the call task is a non-CMN call task, switching(320) the call task from a non-CMN call to a CMN call, and using the CMN call to process the non-bearer service, wherein a CMN is a node that does not have a media node control function but only has a Bearer Control Function BCF, and the function of the CMN is to complete signaling link aggregation between originating Mobile Switching Center MSC servers, and a called number analysis function, so as to implement transmission of Bearer Independent Call Control, BICC protocol information between the MSC servers; and
after the call is established and in the communication process between the first entity and the second entity, when the call task is a bearer service and the type of the call task is a CMN call task, switching(330) the call task from a CMN call to a non-CMN call, and using the non-CMN call to process the bearer service,
wherein the first entity includes an originating MSC and an originating MGW and the second entity includes a terminating MSC and a terminating MGW;
wherein the bearer service includes a service for which media plane information needs to be acquired or involvement of media plane processing is required.

2. The call switching method according to claim 1, wherein the switching the call task from the CMN call to the non-CMN call comprises:
sending a first negotiation request to the first entity;
receiving a first negotiation response sent by the first entity, and establishing a call path whose call flow direction is from the first entity to the MSC;
sending a second negotiation request to the second entity;
receiving a second negotiation response sent by the second entity, and establishing a call path whose call flow direction is from the MSC to the second entity; and
establishing a first media path with the first entity and the second entity, and completing the switching from a CMN call to a non-CMN, wherein the first media path is an in-order path whose call flow direction is from the first entity to the MSC and then from the MSC to the second entity.

3. The call switching method according to claim 1 or 2, wherein the switching the call task from a non-CMN call to a CMN call comprises:
sending, to the first entity, a negotiation request that carries information about the second entity, wherein the information about the second entity comprises IP address, port, and codec information of the second entity; and
sending, to the second entity, a negotiation request that carries information about the first entity, wherein the information about the first entity comprises IP address, port, and codec information of the first entity, so that the first entity, according to the IP address, port, and codec information of the second entity, and the second entity, according to the IP address, port, and codec information of the first entity, establish a second media path between the first entity and the second entity, and complete the switching from a CMN call to a non-CMN call, wherein the second media path is an in-order path in which a flow direction of the call is from the first entity to the second entity.

4. The call switching method according to claims 1 to 3, after the using the non-CMN call to process the bearer service, further comprising:
after processing of the bearer service is ended, switching the call task from a non-CMN call to a CMN call.

5. The call switching method according to any one of claims 1 to 4, before the determining whether the call task is a bearer service and whether a type of the call task is a Call Mediation Node CMN call, further comprising:
receiving a first call establishment request sent by the first entity, and sending a first call request response to first entity;
sending a second call establishment request to the second entity; and
receiving a second call request response sent by the second entity, establishing the call task and a media path of the call task, and using the media path of the call task to bear the call task, wherein the call task is a bearer service and the type of the call task is a non-CMN call.

6. A call switching apparatus, wherein the apparatus comprises:
a determining unit(71), configured to determine, according to a call task of a first entity calling a second entity and a received call answer sent by the second entity, whether the call task is a bearer service and whether a type of the call task is a Call Mediation Node CMN call; and
a switching unit(72), configured to: after the call is established and in the communication process between the first entity and the second entity, when the determining unit determines that the call task is a non-bearer service and the type of the call task is a non-CMN call task, switching the call task from a non-CMN call to a CMN call, and use the CMN call to process the non-bearer service;
the switching unit(72) is further configured to: when the determining unit determines that the call task is a bearer service and the type of the call task is a CMN call task, switching the call task from a CMN call to a non-CMN call, and use the non-CMN call to process the bearer service;
wherein a CMN is a node that does not have a media node control function but only has a Bearer Control Function BCF, and the function of the CMN is to complete signaling link aggregation between originating Mobile Switching Center MSC servers, and a called number analysis function, so as to implement transmission of Bearer Independent Call Control, BICC protocol information between the MSC servers;
wherein the first entity includes an originating MSC and an originating MGW and the second entity includes a terminating MSC and a terminating MGW;
wherein the bearer service includes a service for which media plane information needs to be acquired or involvement of media plane processing is required.

7. The call switching apparatus according to claim 6, wherein when the determining unit determines that the call task is a bearer service and the type of the call task is a CMN call task, the call switching apparatus further comprises:
a sending unit, configured to send a first negotiation request to the first entity;
a receiving unit, configured to: after the sending unit sends the first negotiation request, receive a first negotiation response sent by the first entity, and establish a call path whose call flow direction is from the first entity to the MSC;
the sending unit is further configured to send a second negotiation request to the second entity; and
the receiving unit is further configured to: after the sending unit sends the second negotiation request, receive a second negotiation response sent by the second entity, and establish a call path whose call flow direction is from the MSC to the second entity; and
a path establishing unit, configured to: after the receiving unit receives the second negotiation response, establish a first media path with the first entity and the second entity, and complete a switching from a CMN call to a non-CMN, wherein the first media path is an in-order path whose call flow direction is from the first entity to the MSC and then from the MSC to the second entity.

8. The call switching apparatus according to claim 6, wherein when the determining unit determines that the call task is a non-bearer service and the type of the call task is a non-CMN call task, the call switching apparatus further comprises:
a sending unit, configured to send, to the first entity, a negotiation request that carries information about the second entity, wherein the information about the second entity comprises IP address, port, and codec information of the second entity;
the sending unit is further configured to send, to the second entity, a negotiation request that carries information about the first entity; the information about the first entity comprises IP address, port, and codec information of the first entity so that according to the IP address, port, and codec information of each other, the first entity and the second entity establish a second media path between the first entity and the second entity, and complete a switching from a CMN call to a non-CMN call, wherein the second media path is an in-order path in which a flow direction of the call is from the first entity to the second entity.

9. The call switching apparatus according to any one of claims 6 to 8, wherein the switching unit is further configured to: after processing of the bearer service is ended, switching the call task from a non-CMN call to a CMN call.

10. A call switching system, wherein the system comprises a call switching apparatus, a first entity, and a second entity, wherein:
the call switching apparatus is configured to: determine, according to a call task of the first entity calling the second entity and a received call answer sent by the second entity, whether the call task is a bearer service and whether a type of the call task is a Call Mediation Node CMN call; when the call task is a non-bearer service and the type of the call task is a non-CMN call task, switching the call task from a non-CMN call to a CMN call, and use the CMN call to process the non-bearer service; and after the call is established and in the communication process between the first entity and the second entity, when the call task is a bearer service and the type of the call task is a CMN call task, switching the call task from a CMN call to a non-CMN call, and use the non-CMN call to process the bearer service;
the first entity is configured to send a call establishment request to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service; and
the second entity is configured to send the call answer to the call switching apparatus, so that when it is determined that the call task is a non-bearer service and the type of the call task is a non-Call Mediation Node CMN call task, the call switching apparatus hands over the call task from a non-CMN call to a CMN call; or when it is determined that the call task is a bearer service and the type of the call task is a CMN call task, the call switching apparatus hands over the call task from a CMN call to a non-CMN call, and uses the non-CMN call to process the bearer service;
wherein a CMN is a node that does not have a media node control function but only has a Bearer Control Function BCF, and the function of the CMN is to complete signaling link aggregation between originating Mobile Switching Center MSC servers, and a called number analysis function, so as to implement transmission of Bearer Independent Call Control, BICC protocol information between the MSC servers;
wherein the first entity includes an originating MSC and an originating MGW and the second entity includes a terminating MSC and a terminating MGW;
wherein the bearer service includes a service for which media plane information needs to be acquired or involvement of media plane processing is required.

11. The call switching system according to claim 10, wherein that the call switching apparatus hands over the call task from the CMN call to the non-CMN call comprises:
sending, by the call switching apparatus, a first negotiation request to the first entity;
receiving a first negotiation response sent by the first entity, and establishing a call path whose call flow direction is from the first entity to the MSC;
sending a second negotiation request to the second entity;
receiving a second negotiation response sent by the second entity, and establishing a call path whose call flow direction is from the MSC to the second entity; and
establishing a first media path with the first entity and the second entity, and completing the switching from a CMN call to a non-CMN, wherein the first media path is an in-order path whose call flow direction is from the first entity to the MSC and then from the MSC to the second entity.

12. The call switching system according to claim 10, wherein that the call switching apparatus hands over the call task from a non-CMN call to a CMN call comprises:
sending, to the first entity, a negotiation request that carries information about the second entity, wherein the information about the second entity comprises IP address, port, and codec information of the second entity; and
sending, to the second entity, a negotiation request that carries information about the first entity, wherein the information about the first entity comprises IP address, port, and codec information of the first entity, so that the first entity, according to the IP address, port, and codec information of the second entity, and the second entity, according to the IP address, port, and codec information of the first entity, establish a second media path between the first entity and the second entity, and complete the switching from a CMN call to a non-CMN call, wherein the second media path is an in-order path in which a flow direction of the call is from the first entity to the second entity.

## Patentansprüche

1. Rufumschaltverfahren, wobei das Verfahren umfasst:
Bestimmung (310) durch eine Rufumschaltvorrichtung, nach einer Rufaufgabe des Rufens einer zweiten Entität durch eine erste Entität und einer Antwort auf einen empfangenen Ruf, die von der zweiten Entität empfangen wird, ob die Rufaufgabe ein Trägerservice und ob eine Art der Rufaufgabe ein "Rufvermittlungsknoten"-CMN Ruf ist; wenn die Rufaufgabe ein Nichtträgerservice ist und die Art der Rufaufgabe eine Nicht-CMN-Rufaufgabe ist, Umschalten (320) der Rufaufgabe von einem Nicht-CMN-Ruf auf einen CMN-Ruf, und Verwendung des CMN-Rufs zur Verarbeitung des Nicht-Trägerdiensts, wobei ein CMN ein Knoten ist, der keine Medienknotensteuerfunktion, sondern nur eine Trägersteuerfunktion BCF aufweist und die Funktion des CMN ist, die Signalisierungslinksammlung zwischen den Ursprungs-"Mobile Switching Center"- MSC Servern abzuschließen, um eine Funktion zur Analyse der angerufenen Nummer, um das Senden von "Bearer Independent Call Control"-, BICC Protokollinformationen zwischen den -Servern umzusetzen; und
nach Aufbau des Rufs und in dem Kommunikationsverfahren zwischen der ersten Entität und der zweiten Entität, wenn die Rufaufgabe ein Trägerdienst ist und der Typ der Rufaufgabe eine CMN-Rufaufgabe ist, Umschalten (330) der Rufaufgabe von einem CMN-Ruf auf einen Nicht-CMN-Ruf, und Verwendung des Nicht-CMN-Rufs zur Verarbeitung des Trägerdiensts,
wobei die erste Entität ein Ursprungs-MSC und ein Ursprungs-MGW umfasst und die zweite Entität ein Ursprungs-MSC und ein End-MGW umfasst;
wobei der Trägerdienst einen Dienst umfasst, für den Medienebeneninformationen beschafft werden müssen oder die Beteiligung der Medienebenenverarbeitung erforderlich ist.

2. Rufumschaltverfahren nach Anspruch 1, wobei das Schalten der Rufaufgabe von dem CMN-Ruf auf den Nicht-CMN-Ruf umfasst:
Senden einer ersten Verhandlungsanfrage an die erste Entität;
Empfang einer ersten Verhandlungsantwort, die durch die erste Entität gesendet wird, und Aufbau eines Rufpfad, dessen Rufflussrichtung von der ersten Entität zu dem MSC reicht;
Senden einer zweiten Verhandlungsanfrage an die zweite Entität;
Empfang einer zweiten Verhandlungsantwort, die durch die zweite Entität gesendet wird, und Aufbau eines Rufpfads, dessen Rufflussrichtung von dem MSC an die zweite Entität reicht; und
Aufbau eines ersten Medienpfads mit der ersten Entität und der zweiten Entität, und Abschluss des Umschaltens von einem CMN-Ruf auf einen Nicht-CMN, wobei der erste Medienpfad ein Pfad in einer Ordnung ist, dessen Rufflussrichtung von der ersten Entität an das MSC und dann von dem MSC an die zweite Entität geht.

3. Rufumschaltverfahren nach Anspruch 1 oder 2, wobei das Schalten der Rufaufgabe von einem Nicht-CMN-Ruf an einen CMN-Ruf umfasst:
Senden einer Verhandlungsanfrage, die Informationen zu der zweiten Entität trägt, an die erste Entität, wobei die Informationen zu der zweiten Entität die IP-Adresse, Port und Codecinformationen der zweiten Entität umfassen; und
Senden einer Verhandlungsanfrage, die Informationen zu der ersten Entität trägt, an die zweite Entität, wobei die Informationen zu der ersten Entität die IP-Adresse, den Port, und Codecinformationen der ersten Entität umfassen, sodass die erste Entität nach der IP-Adresse, dem Port und den Codecinformationen der zweiten Entität, und die zweite Entität nach der IP-Adresse, dem Port und den Codecinformationen der ersten Entität einen zweiten Medienpfad zwischen der ersten Entität und der zweiten Entität aufbauen und das Umschalten von einem CMN-Ruf auf einen Nicht-CMN-Ruf abschließen, wobei der zweite Medienpfad ein Pfad in Reihenfolge ist, in dem eine Flussrichtung des Rufs von der ersten Entität an die zweite Entität geht.

4. Rufumschaltverfahren nach Anspruch 1 bis 3, nach dem Verwenden des Nicht-CMN-Rufs zum Verarbeiten des Trägerdiensts ferner umfassend:
nach dem Ende des Verarbeitens des Trägerdiensts Umschalten der Rufaufgabe von einem Nicht-CMN-Ruf an einen CMN-Ruf.

5. Rufumschaltverfahren nach einem der Ansprüche 1 bis 4, vor der Bestimmung, ob die Rufaufgabe ein Trägerdienst ist und ob eine Art der Rufaufgabe ein Rufvermittlungsknoten CMN-Rufs, ferner umfassend:
Empfang einer ersten Rufaufbauanfrage, die durch die erste Entität gesendet wird, und Senden einer ersten Rufanfragenantwort an die erste Entität;
Senden einer zweiten Rufaufbauanfrage an die zweite Entität; und
Empfang einer zweiten Rufanfragenantwort, die durch die zweite Entität gesendet wurde, Aufbau der Rufaufgabe und eines Medienpfads der Rufaufgabe, und Verwendung des Medienpfads der Rufaufgabe zum Tragen der Rufaufgabe, wobei die Rufaufgabe ein Trägerdienst ist und die Art der Rufaufgabe ein Nicht-CMN-Ruf ist.

6. Rufumschaltvorrichtung, wobei die Vorrichtung umfasst:
eine Bestimmungseinheit (71), konfiguriert zum Bestimmen nach einer Rufaufgabe einer ersten Entität, die eine zweite Entität ruft, und einer Antwort auf einen empfangenen Ruf, die durch die zweite Entität gesendet wird, ob die Rufaufgabe ein Trägerdienst ist und ob eine Art von Rufaufgabe ein Rufvermittlungsknoten- CMN-Ruf ist; und
eine Schalteinheit (72), konfiguriert um: nach Aufbau des Rufs und in dem Kommunikationsverfahren zwischen der ersten Entität und der zweiten Entität, wenn die Bestimmungseinheit bestimmt, dass die Rufaufgabe ein Nicht-Trägerdienst ist und der Typ der Rufaufgabe eine Nicht-CMN-Rufaufgabe ist, Umschalten der Rufaufgabe von einem Nicht-CMN-Ruf auf einen CMN-Ruf, und Verwendung des CMN-Rufs zur Verarbeitung des Nicht-Trägerdiensts;
die Schalteinheit (72) ist ferner konfiguriert, um: wenn die Bestimmungseinheit bestimmt, dass die Rufaufgabe ein Trägerdienst ist und die Art der Rufaufgabe eine CMN Rufaufgabe ist, Umschalten der Rufaufgabe von einem CMN-Ruf auf einen Nicht-CMN-Ruf, und Verwendung des Nicht-CMN-Rufs zur Verarbeitung des Trägerdiensts;
wobei ein CMN ein Knoten ist, der keine Medienknotensteuerfunktion, sondern nur eine Trägersteuerfunktion BCF aufweist, und die Funktion des CMN ist, die Signalisierungslinksammlung zwischen Ursprungs-"Mobile Switching Center" - Servern und eine Funktion zur Analyse der angerufenen Nummer abzuschließen, um die Übertragung der "Bearer Independent Call Control"-, BICC Protokollinformationen zwischen den MSC-Servern umzusetzen;
wobei die erste Entität ein Ursprungs-MSC und ein Ursprungs-MGW umfasst und die zweite Entität ein Ursprungs-MSC und ein End-MGW umfasst;
wobei der Trägerdienst einen Dienst umfasst, für den Medienebeneninformationen beschafft werden müssen oder die Beteiligung der Medienebenenverarbeitung erforderlich ist.

7. Rufumschaltvorrichtung nach Anspruch 6, wobei die Rufumschaltvorrichtung, wenn die Bestimmungseinheit bestimmt, dass die Rufaufgabe ein Trägerdienst ist und die Art der Rufaufgabe eine CMN-Rufaufgabe ist, ferner umfasst:
eine Sendeeinheit, konfiguriert zum Senden einer ersten Verhandlungsanfrage an die erste Entität;
eine Empfangseinheit, konfiguriert um: nachdem die Sendeeinheit eine erste Verhandlungsanfrage sendet, eine erste Verhandlungsantwort zu empfangen, die durch die erste Entität gesendet wird, und einen Rufpfad aufzubauen, dessen Rufflussrichtung von der ersten Entität zu dem MSC geht;
die Sendeeinheit ferner zum Senden einer zweiten Verhandlungsanfrage an die zweite Entität konfiguriert ist; und
die Empfangseinheit ferner konfiguriert ist, nach dem Senden der zweiten Verhandlungsanfrage durch die Sendeeinheit eine zweite Verhandlungsantwort zu empfangen, die durch die zweite Entität gesendet wird, und einen Rufpfad aufzubauen, dessen Rufflussrichtung von dem MSC an die zweite Entität geht; und
eine Pfadaufbaueinheit, konfiguriert um: nach Empfang der zweiten Verhandlungsantwort durch die Empfangseinheit einen ersten Medienpfad mit der ersten Entität und der zweiten Entität aufzubauen, und ein Umschalten von einem CMN-Ruf auf einen Nicht-CMN abzuschließen, wobei der erste Medienpfad ein Pfad in einer Ordnung ist, dessen Rufflussrichtung von der ersten Entität an das MSC und dann von dem MSC an die zweite Entität geht.

8. Rufumschaltvorrichtung nach Anspruch 6, wobei die Rufumschaltvorrichtung, wenn die Bestimmungseinheit bestimmt, dass die Rufaufgabe ein Nicht-Trägerdienst ist und die Art der Rufaufgabe eine Nicht-CMN-Rufaufgabe ist, ferner umfasst:
eine Sendeeinheit, konfiguriert zum Senden einer Verhandlungsanfrage, die Informationen zu der zweiten Entität trägt, an die erste Entität, wobei die Informationen zu der zweiten Entität die IP-Adresse, den Port und Codecinformationen der zweiten Entität umfasst;
die Sendeeinheit ferner konfiguriert ist zum Senden einer Verhandlungsanfrage, die Informationen zu der ersten Entität trägt, an die zweite Entität; die Informationen zu der ersten Entität umfassen die IP-Adresse, den Port, und Codecinformationen der ersten Entität, sodass die erste Entität und die zweite Entität nach der IP-Adresse, dem Port und den Codecinformationen der jeweils anderen einen zweiten Medienpfad zwischen der ersten Entität und der zweiten Entität aufbauen und ein Umschalten von einem CMN-Ruf auf einen Nicht-CMN-Ruf abschließen, wobei der zweite Medienpfad ein Pfad in Reihenfolge ist, in dem eine Flussrichtung des Rufs von der ersten Entität an die zweite Entität geht.

9. Rufumschaltvorrichtung nach einem der Ansprüche 6 bis 8, wobei die Schalteinheit ferner konfiguriert ist, um: nach dem Ende des Verarbeitens des Trägerdiensts die Rufaufgabe von einem Nicht-CMN-Ruf an einen CMN-Ruf umzuschalten.

10. Rufumschaltsystem, wobei das System eine Rufumschaltvorrichtung, eine erste Entität und eine zweite Entität umfasst, wobei:
die Rufumschaltvorrichtung konfiguriert ist, um: nach einer Rufaufgabe der ersten Entität, die die zweite Entität ruft, und einer Antwort auf einen empfangenen Ruf, die durch die zweite Entität gesendet wird, zu bestimmen, ob die Rufaufgabe ein Trägerdienst ist und ob eine Art der Rufaufgabe ein Rufvermittlungsknoten-CMN-Ruf ist; wenn die Rufaufgabe ein Nicht-Trägerdienst ist und die Art der Rufaufgabe eine Nicht-CMN Rufaufgabe ist, Umschalten der Rufaufgabe von einem Nicht-CMN-Ruf auf einen CMN-Ruf und Verwendung des CMN-Rufs zur Verarbeitung des Nicht-Trägerdiensts; und nach Aufbau des Rufs und in dem Kommunikationsverfahren zwischen der ersten Entität und der zweiten Entität, wenn die Rufaufgabe ein Trägerdienst ist und die Art der Rufaufgabe eine CMN Rufaufgabe ist, Umschalten der Rufaufgabe von einem CMN-Ruf auf einen Nicht-CMN-Ruf, und Verwendung des Nicht-CMN-Rufs zur Verarbeitung des Trägerdiensts;
die erste Entität ist konfiguriert zum Senden einer Rufaufbauanfrage an die Rufumschaltvorrichtung, sodass, wenn bestimmt wird, dass die Rufaufgabe ein Nicht-Trägerdienst ist, und die Art der Rufaufgabe eine Nicht-Rufvermittlungsknoten-CMN-Rufaufgabe ist, die Rufumschaltvorrichtung die Rufaufgabe von einem Nicht-CMN-Ruf auf einen CMN-Ruf umschaltet; oder wenn bestimmt wird, dass die Rufaufgabe ein Trägerdienst ist und die Art der Rufaufgabe eine CMN-Rufaufgabe ist, die Rufumschaltvorrichtung die Rufaufgabe von einem CMN-Ruf an einen Nicht-CMN-Ruf übergibt und den Nicht-CMN-Ruf verwendet, um den Trägerdienst zu verarbeiten; und
die zweite Entität ist konfiguriert zum Senden der Rufantwort an die Rufumschaltvorrichtung, sodass, wenn bestimmt wird, dass die Rufaufgabe ein Nicht-Trägerdienst ist und die Art der Rufaufgabe eine Nicht-Rufvermittlungsknoten-CMN-Rufaufgabe ist, die Rufumschaltvorrichtung die Rufaufgabe von einem Nicht-CMN-Ruf auf einen CMN-Ruf umschaltet; oder wenn bestimmt wird, dass die Rufaufgabe ein Trägerdienst ist und die Art der Rufaufgabe eine CMN-Rufaufgabe ist, die Rufumschaltvorrichtung die Rufaufgabe von einem CMN-Ruf an einen Nicht-CMN-Ruf übergibt, und den Nicht-CMN-Ruf verwendet, um den Trägerdienst zu verarbeiten;
wobei ein CMN ein Knoten ist, der keine Medienknotensteuerfunktion, sondern nur eine Trägersteuerfunktion BCF aufweist, und die Funktion des CMN ist, die Signalisierungslinksammlung zwischen Ursprungs-"Mobile Switching Center" - Servern und eine Funktion zur Analyse der angerufenen Nummer abzuschließen, um die Übertragung der "Bearer Independent Call Control"-, BICC Protokollinformationen zwischen den MSC-Servern umzusetzen;
wobei die erste Entität ein Ursprungs-MSC und ein Ursprungs-MGW umfasst und die zweite Entität ein Ursprungs-MSC und ein End-MGW umfasst;
wobei der Trägerdienst einen Dienst umfasst, für den Medienebeneninformationen beschafft werden müssen oder die Beteiligung der Medienebenenverarbeitung erforderlich ist.

11. Rufumschaltsystem nach Anspruch 10, wobei dass die Rufumschaltvorrichtung die Rufaufgabe von dem CMN-Ruf auf den Nicht-CMN-Ruf übergibt, umfasst:
Senden einer ersten Verhandlungsanfrage durch die Rufumschaltvorrichtung an die erste Entität;
Empfang einer ersten Verhandlungsantwort, die durch die erste Entität gesendet wird, und Aufbau eines Rufpfad, dessen Rufflussrichtung von der ersten Entität zu dem MSC reicht;
Senden einer zweiten Verhandlungsanfrage an die zweite Entität;
Empfang einer zweiten Verhandlungsantwort, die durch die zweite Entität gesendet wird, und Aufbau eines Rufpfads, dessen Rufflussrichtung von dem MSC an die zweite Entität reicht; und
Aufbau eines ersten Medienpfads mit der ersten Entität und der zweiten Entität, und Abschluss des Umschaltens von einem CMN-Ruf auf einen Nicht-CMN, wobei der erste Medienpfad ein Pfad in einer Ordnung ist, dessen Rufflussrichtung von der ersten Entität an das MSC und dann von dem MSC an die zweite Entität geht.

12. Rufumschaltsystem nach Anspruch 10, wobei dass die Rufumschaltvorrichtung die Rufaufgabe von einem Nicht-CMN-Ruf an einen CMN-Ruf übergibt, umfasst:
Senden einer Verhandlungsanfrage, die Informationen zu der zweiten Entität trägt, an die erste Entität, wobei die Informationen zu der zweiten Entität die IP-Adresse, Port und Codecinformationen der zweiten Entität umfassen; und
Senden einer Verhandlungsanfrage, die Informationen zu der ersten Entität trägt, an die zweite Entität, wobei die Informationen zu der ersten Entität die IP-Adresse, den Port, und Codecinformationen der ersten Entität umfassen, sodass die erste Entität nach der IP-Adresse, dem Port und den Codecinformationen der zweiten Entität, und die zweite Entität nach der IP-Adresse, dem Port und den Codecinformationen der ersten Entität einen zweiten Medienpfad zwischen der ersten Entität und der zweiten Entität aufbauen und das Umschalten von einem CMN-Ruf auf einen Nicht-CMN-Ruf abschließen, wobei der zweite Medienpfad ein Pfad in Reihenfolge ist, in dem eine Flussrichtung des Rufs von der ersten Entität an die zweite Entität geht.

## Revendications

1. Procédé de commutation d'appel, le procédé consistant à :
déterminer (310) avec un appareil de commutation d'appel, en fonction d'une tâche d'appel pour appeler une seconde entité par une première entité et recevoir une réponse d'appel reçue de la seconde entité, si la tâche d'appel est un service de porteuse et si un type de la tâche d'appel est un appel de noeud de médiation d'appel CMN ; lorsque la tâche d'appel est un service de non-porteuse et que le type de tâche d'appel est une tâche d'appel non CMN, commuter (320) la tâche d'appel d'un appel non CMN à un appel CMN, et utiliser l'appel CMN pour traiter le service de non-porteuse, un CMN étant un noeud qui n'a pas de fonction de commande de noeud de média mais a uniquement une fonction de commande de porteuse BCF, et la fonction du CMN étant de terminer une agrégation de liaison de signalisation entre des serveurs de centres de commutation mobiles MSC d'origine, et une fonction d'analyse de numéro appelé de manière à mettre en oeuvre une transmission d'informations de protocole de commande d'appel indépendant de porteuse BICC entre les serveurs MSC ; et
une fois l'appel établi et dans le processus de communication entre la première entité et la seconde entité, lorsque la tâche d'appel est un service de porteuse et que le type de tâche d'appel est une tâche d'appel CMN, commuter (330) la tâche d'appel d'un appel CMN à un appel non CMN et utiliser l'appel non CMN pour traiter le service de porteuse ;
la première entité comprenant un MSC d'origine et un MGW d'origine, et la seconde entité comprenant un MSC de fin et un MGW de fin ;
le service de porteuse comprenant un service pour lequel des informations de plan de média doivent être acquises ou une implication du traitement de plan de média est requise.

2. Procédé de commutation d'appel selon la revendication 1, dans lequel la commutation de la tâche d'appel de l'appel CMN vers l'appel non CMN consiste à :
envoyer une première demande de négociation à la première entité ;
recevoir une première réponse de négociation envoyée par la première entité, et établir un trajet d'appel dont la direction de flux d'appel va de la première entité vers le MSC ;
envoyer une seconde demande de négociation à la seconde entité ;
recevoir une seconde réponse de négociation envoyée par la seconde entité, et établir un trajet d'appel dont la direction de flux d'appel va du MSC à la seconde entité ; et
établir un premier trajet de média avec la première entité et la seconde entité, et terminer une commutation d'un appel CMN vers un appel non CMN, le premier trajet de média étant un trajet en ordre n dont la direction de flux d'appel va de la première entité au MSC puis du MSC à la seconde entité.

3. Procédé de commutation d'appel selon la revendication 1 ou 2, dans lequel la commutation de la tâche d'appel d'un appel non CMN vers un appel CMN consiste à :
envoyer à la première entité une demande de négociation qui transporte des informations sur la seconde entité, les informations sur la seconde entité comprenant des informations d'adresse IP, de port et de codec de la seconde entité ; et
envoyer à la seconde entité une demande de négociation qui transporte des informations sur la première entité, les informations sur la première entité comprenant des informations d'adresse IP, de port et de codèc de la première entité, de sorte que la première entité, en fonction des informations d'adresse IP, de port et de codec de la seconde entité, et que la seconde entité, en fonction des informations d'adresse IP, de port et de codec de la première entité, établissent un second trajet de média entre la première entité et la seconde entité, et terminent la commutation d'un appel CMN vers un appel non CMN, le second trajet de média étant un trajet en ordre n dans lequel une direction de flux de l'appel va de la première entité à la seconde entité.

4. Procédé de commutation d'appel selon les revendications 1 à 3, qui, après l'utilisation de l'appel non CMN pour traiter le service de porteuse, consiste en outre, une fois le traitement du service de porteuse terminé, à commuter la tâche d'appel d'un appel non CMN à un appel CMN.

5. Procédé de commutation d'appel selon l'une quelconque des revendications 1 à 4, qui, avant de déterminer si la tâche d'appel est un service de porteuse et si un type de tâche d'appel est un appel de noeud de médiation d'appel CMN, consiste en outre à :
recevoir une première demande d'établissement d'appel envoyée par la première entité, et envoyer une première réponse de demande d'appel à la première entité ;
envoyer une seconde demande d'établissement d'appel à la seconde entité ; et
recevoir une seconde réponse de demande d'appel envoyée par la seconde entité, établir la tâche d'appel et un trajet de média de la tâche d'appel, et utiliser le trajet de média de la tâche d'appel pour porter la tâche d'appel, la tâche d'appel étant un service de porteuse et le type de tâche d'appel est un appel non CMN.

6. Appareil de commutation d'appel, l'appareil comprenant :
une unité de détermination (71) conçue pour déterminer, en fonction d'une tâche d'appel d'une première entité appelant une seconde entité et d'une réponse d'appel reçue envoyée par la seconde entité, si la tâche d'appel est un service de porteuse et si un type de la tâche d'appel est un appel de noeud de médiation d'appel CMN ; et
une unité de commutation (72) conçue pour : une fois l'appel établi et dans le processus de communication entre la première entité et la seconde entité, lorsque l'unité de détermination détermine que la tâche d'appel est un service de non-porteuse et que le type de tâche d'appel est une tâche d'appel non CMN, commuter la tâche d'appel d'un appel non CMN à un appel CMN, et utiliser l'appel CMN pour traiter le service de non-porteuse ;
l'unité de commutation (72) est en outre conçue pour : lorsque l'unité de détermination détermine que la tâche d'appel est un service de porteuse et que le type de tâche d'appel est une tâche d'appel CMN, commuter la tâche d'appel d'un appel CMN à un appel non CMN et utiliser l'appel non CMN pour traiter le service de porteuse ;
un CMN étant un noeud qui n'a pas de fonction de commande de noeud de média mais a uniquement une fonction de commande de porteuse BCF, et la fonction du CMN étant de terminer une agrégation de liaison de signalisation entre des serveurs de centres de commutation mobiles MSC d'origine, et une fonction d'analyse de numéro appelé de manière à mettre en oeuvre une transmission d'informations de protocole de commande d'appel indépendant de porteuse BICC entre les serveurs MSC;
la première entité comprenant un MSC d'origine et un MGW d'origine, et la seconde entité comprenant un MSC de fin et un MGW de fin ;
le service de porteuse comprenant un service pour lequel des informations de plan de média doivent être acquises ou une implication du traitement de plan de média est requise.

7. Appareil de commutation d'appel selon la revendication 6, dans lequel lorsque l'unité de détermination détermine que la tâche d'appel est un service de porteuse et que le type de tâche d'appel est une tâche d'appel CMN, l'appareil de commutation d'appel comprend en outre :
une unité d'envoi conçue pour envoyer une première demande de négociation à la première entité ;
une unité de réception conçue pour : une fois que l'unité d'envoi a envoyé la première demande de négociation, recevoir une première réponse de négociation envoyée par la première entité, et établir un trajet d'appel dont la direction de flux d'appel va de la première entité vers le MSC ;
l'unité d'envoi est en outre conçue pour envoyer une seconde demande de négociation à la seconde entité ; et
l'unité de réception est en outre conçue pour, une fois que l'unité d'envoi a envoyé la première demande de négociation, recevoir une seconde réponse de négociation envoyée par la seconde entité, et établir un trajet d'appel dont la direction de flux d'appel va du MSC à la seconde entité ; et
une unité d'établissement de trajet conçue pour : une fois que l'unité de réception a reçu la seconde réponse de négociation, établir un premier trajet de média avec la première entité et la seconde entité, et terminer une commutation d'un appel CMN vers un appel non CMN, le premier trajet de média étant un trajet en ordre n dont la direction de flux d'appel va de la première entité au MSC puis du MSC à la seconde entité.

8. Appareil de commutation d'appel selon la revendication 6, dans lequel lorsque l'unité de détermination détermine que la tâche d'appel est un service de non-porteuse et que le type de tâche d'appel est une tâche d'appel non CMN, l'appareil de commutation d'appel comprend en outre :
une unité d'envoi conçue pour envoyer à la première entité une demande de négociation qui transporte des informations sur la seconde entité, les informations sur la seconde entité comprenant des informations d'adresse IP, de port et de codec de la seconde entité ;
l'unité d'envoi est en outre conçue pour envoyer à la seconde entité une demande de négociation qui transporte des informations sur la première entité, les informations sur la première entité comprenant des informations d'adresse IP, de port et de codec de la première entité, de sorte que, en fonction des informations d'adresse IP, de port et de codec de chacune, la première entité et la seconde entité établissent un second trajet de média entre la première entité et la seconde entité, et terminent une commutation d'un appel CMN vers un appel non CMN, le second trajet de média étant un trajet en ordre n dans lequel une direction de flux de l'appel va de la première entité à la seconde entité.

9. Appareil de commutation d'appel selon l'une quelconque des revendications 6 à 8, dans lequel l'unité de commutation est en outre conçue pour, une fois le traitement du service de porteuse terminé, à commuter la tâche d'appel d'un appel non CMN à un appel CMN.

10. Système de commutation d'appel, le système comprenant un appareil de commutation d'appel, une première entité et une seconde entité :
l'appareil de commutation d'appel étant conçu pour : déterminer, en fonction d'une tâche d'appel de la première entité appelant la seconde entité et d'une réponse d'appel reçue envoyée par la seconde entité, si la tâche d'appel est un service de porteuse et si un type de la tâche d'appel est un appel de noeud de médiation d'appel CMN ; lorsque la tâche d'appel est un service de non-porteuse et que le type de tâche d'appel est une tâche d'appel non CMN, commuter la tâche d'appel d'un appel non CMN à un appel CMN, et utiliser l'appel CMN pour traiter le service de non-porteuse ; et une fois l'appel établi et dans le processus de communication entre la première entité et la seconde entité, lorsque la tâche d'appel est un service de porteuse et que le type de tâche d'appel est une tâche d'appel CMN, commuter la tâche d'appel d'un appel CMN à un appel non CMN et utiliser l'appel non CMN pour traiter le service de porteuse ;
la première entité étant conçue pour envoyer une demande d'établissement d'appel à l'appareil de commutation d'appel de sorte que, lorsqu'il est déterminé que la tâche d'appel est un service de non-porteuse et que le type de tâche d'appel est une tâche d'appel non CMN (noeud de médiation d'appel), l'appareil de commutation d'appel transfère la tâche d'appel d'un appel non CMN à un appel CMN ; ou lorsqu'il est déterminé que la tâche d'appel est un service de porteuse et que le type de tâche d'appel est une tâche d'appel CMN, l'appareil de commutation d'appel transfère la tâche d'appel d'un appel CMN à un appel non CMN, et utilise l'appel non CMN pour traiter le service de porteuse ; et
la seconde entité étant conçue pour envoyer la réponse d'appel à l'appareil de commutation d'appel de sorte que, lorsqu'il est déterminé que la tâche d'appel est un service de non-porteuse et que le type de tâche d'appel est une tâche d'appel non CMN (noeud de médiation d'appel), l'appareil de commutation d'appel transfère la tâche d'appel d'un appel non CMN à un appel CMN ; ou lorsqu'il est déterminé que la tâche d'appel est un service de porteuse et que le type de tâche d'appel est une tâche d'appel CMN, l'appareil de commutation transfère la tâche d'appel d'un appel CMN à un appel non CMN, et utilise l'appel non CMN pour traiter le service de porteuse ;
un CMN étant un noeud qui n'a pas de fonction de commande de noeud de média mais a uniquement une fonction de commande de porteuse BCF, et la fonction du CMN étant de terminer une agrégation de liaison de signalisation entre des serveurs de centres de commutation mobiles MSC d'origine, et une fonction d'analyse de numéro appelé de manière à mettre en oeuvre une transmission d'informations de protocole de commande d'appel indépendant de porteuse BICC entre les serveurs MSC;
la première entité comprenant un MSC d'origine et un MGW d'origine, et la seconde entité comprenant un MSC de fin et un MGW de fin ;
le service de porteuse comprenant un service pour lequel des informations de plan de média doivent être acquises ou une implication du traitement de plan de média est requise.

11. Système de commutation d'appel selon la revendication 10, dans lequel le transfert par l'appareil de commutation d'appel de la tâche d'appel d'un appel CMN à un appel non CMN consiste à :
envoyer avec l'appareil de commutation d'appel une première demande de négociation à la première entité ;
recevoir une première réponse de négociation envoyée par la première entité, et établir un trajet d'appel dont la direction de flux d'appel va de la première entité vers le MSC ;
envoyer une seconde demande de négociation à la seconde entité ;
recevoir une seconde réponse de négociation envoyée par la seconde entité, et établir un trajet d'appel dont la direction de flux d'appel va du MSC à la seconde entité ; et
établir un premier trajet de média avec la première entité et la seconde entité, et terminer une commutation d'un appel CMN vers un appel non CMN, le premier trajet de média étant un trajet en ordre n dont la direction de flux d'appel va de la première entité au MSC puis du MSC à la seconde entité.

12. Système de commutation d'appel selon la revendication 10, dans lequel le transfert par l'appareil de commutation d'appel de la tâche d'appel d'un appel non CMN à un appel CMN consiste à :
envoyer à la première entité une demande de négociation qui transporte des informations sur la seconde entité, les informations sur la seconde entité comprenant des informations d'adresse IP, de port et de codec de la seconde entité ; et
envoyer à la seconde entité une demande de négociation qui transporte des informations sur la première entité, les informations sur la première entité comprenant des informations d'adresse IP, de port et de codec de la première entité, de sorte que la première entité, en fonction des informations d'adresse IP, de port et de codec de la seconde entité, et que la seconde entité, en fonction des informations d'adresse IP, de port et de codec de la première entité, établissent un second trajet de média entre la première entité et la seconde entité, et terminent la commutation d'un appel CMN vers un appel non CMN, le second trajet de média étant un trajet en ordre n dans lequel la direction de flux de l'appel va de la première entité à la seconde entité.
